# EUROPÄISCHE PATENTANMELDUNG

(11) **EP 2 210 775 A1**
(43) Veröffentlichungstag der Anmeldung: **28.07.2010**
(21) Anmeldenummer: 10151513.8
(22) Anmeldetag: 25.01.2010
(51) Int. Cl.: B60Q 1/52, G08G 1/16

(54) **Warnvorrichtung für Verkehrsobjekte, zum Beispiel Fahrzeuge, Sondersignalanlagen an Fahrzeugen, transportable Warnbaken oder Warnschilder**

(30) Priorität: 27.01.2009 DE 102009006218
(71) Anmelder: Hella KGaA Hueck & Co., 59552 Lippstadt (DE)
(72) Erfinder: Dumin, Robert, 59519 Möhnesee (DE)

(57) **Zusammenfassung**

Warnvorrichtung (1) für Verkehrsobjekte (E), zum Beispiel Fahrzeuge, Sondersignalanlagen an Fahrzeugen, transportable Warnbaken oder Warnschilder, zum Einsatz am ruhenden Verkehrsobjekt mit folgenden Merkmalen:
- die Warnvorrichtung (1) weist eine Sensor- und Auswerteanordnung und wenigstens ein Warnmittel auf,
- die Sensor- und Auswerteanordnung weist wenigstens einen Sensor zum Erfassen der Entfernung und der Geschwindigkeit eines sich dem Verkehrsobjekt nähernden Fahrzeugs auf,
- die Sensor- und Auswerteanordnung ist zum Auswerten der Entfernung und Geschwindigkeit und Erzeugen eines Aktivierungssignals geeignet und eingerichtet, das erzeugt wird, wenn bei weiterer Annäherung des Fahrzeugs ein Auffahren des Fahrzeugs auf das Verkehrsobjekt droht, und das an einem Ausgang des Auswertemittels abgreifbar ist,
- das wenigstens eine Warnmittel ist mit dem Ausgang der Sensor- und Auswerteanordnung verbunden und zum Erzeugen von wenigstes einem Warnsignal geeignet und eingerichtet, wenn am Ausgang ein Aktivierungssignal anliegt.

## Beschreibung

Die Erfindung betrifft eine Warnvorrichtung für Verkehrsobjekte, zum Beispiel Fahrzeuge, Sondersignalanlagen an Fahrzeugen, transportable Warnbaken oder Warnschilder, zum Einsatz am ruhenden Verkehrsobjekt.

In der Vergangenheit haben sich eine Vielzahl von schweren Unfällen mit Personenschäden durch Unfälle auf Standspuren von Autobahnen oder Schnellstraßen oder den Seitenstreifen von Bundesstraßen ereignet. Dabei sind Fahrzeuge in auf den Standspuren oder Seitenstreifen stehende Fahrzeuge gefahren. Die Fahrzeug auf den Standspuren oder Seitenstreifen waren dabei häufig Einsatzfahrzeuge der Polizei oder der Notdienste, Pannenhilfefahrzeuge oder Fahrzeuge der Straßenmeistereien. Bei den Fahrzeugen auf den Standspuren oder Seitenstreifen hat es sich aber auch um defekte Fahrzeuge oder aus anderen Gründen abgestellte Fahrzeuge gehandelt.

Die in die auf den Standspuren und den Seitenstreifen abgestellten Fahrzeuge fahrenden Fahrzeuge waren zum Teil verbotenerweise auf den Standspuren oder Seitenstreifen unterwegs. Zum Teil fuhren die Fahrzeuge zunächst auf dem rechten Fahrstreifen der Straßen und kamen aufgrund eines Sekundenschlafes des Kraftfahrzeugführers von dem rechten Fahrstreifen ab und gelangten so auf die Standspuren oder Seitenstreifen. Dort rasten sie dann zum Teil ungebremst in die auf den Seitenstreifen und Standspuren abgestellten Fahrzeuge.

Der Erfindung liegt die Aufgabe zu Grunde, eine Warnvorrichtung vorzuschlagen, die Teil eines ruhenden Verkehrsobjektes, wie zum Beispiel eines Fahrzeugs, einer Sondersignalanlage an einem Fahrzeug, einer Warnbake oder eines Warnschildes sein kann, um sich auf dem Standstreifen oder den Seitenstreifen befindlichen Personen vor einem auf dem Standstreifen oder den Seitenstreifen herannahenden Fahrzeug zu warnen. Durch eine rechtzeitige Warnung könnten sich die auf dem Standstreifen oder dem Seitenstreifen befindlichen Personen in Sicherheit und aus dem Gefahrenbereich bringen.

Als Sondersignalanlagen im Sinne dieser Anmeldung werden optische und akustische Signalanlagen auf Einsatzfahrzeugen der Polizei, der Feuerwehr und Rettungsdienste sowie auf Fahrzeugen von Pannenhilfediensten und Straßenmeistereien bezeichnet. Solche Sondersignalanlagen weisen in der Regel blaue oder gelbe Warnleuchten und ggf. Folgetonhörner auf.

Diese Aufgabe wird durch eine erfindungsgemäße Warnvorrichtung für ein Verkehrsobjekt nach Anspruch 1 gelöst. Eine derartige erfindungsgemäße Warnvorrichtung weist eine Sensor- und Auswerteanordnung und wenigstens ein Warnmittel auf. Die Sensor- und Auswerteanordnung hat einen Sensor zum Erfassen der Entfernung und der Geschwindigkeit eines sich dem Verkehrsobjekt nähernden Fahrzeugs. Die Sensor- und Auswerteanordnung ist zum Auswerten der Entfernung und der Geschwindigkeit und zum Erzeugen eines Aktivierungssignals geeignet und eingerichtet. Bei einer erfindungsgemäßen Warnvorrichtung wird von der Sensor- und Auswerteanordnung immer dann ein Aktivierungssignal erzeugt, wenn bei weiterer Annäherung des erkannten Fahrzeugs ein Auffahren des erkannten Fahrzeugs auf das Verkehrsobjekt droht. Das Aktivierungssignal ist an einem Ausgang der Sensor- und Auswerteanordnung abgreifbar. Das wenigstens eine Warnmittel ist mit diesem Ausgang der Sensor- und Auswerteanordnung verbunden. Sobald das Aktivierungssignal anliegt, wird von dem Warnmittel ein Warnsignal erzeugt.

Aus dem Stand der Technik sind solche erfindungsgemäßen Warnvorrichtungen oder ähnliche Warnvorrichtungen, die die auf der Standspur oder dem Seitenstreifen befindlichen Personen vor herannahenden Fahrzeugen warnen, nicht bekannt. Aus dem Stand der Technik sind nur andere Warnvorrichtungen bekannt, die bei fahrenden Kraftfahrzeugen den Abstand und/oder die Relativgeschwindigkeit eines anderen Objektes zum eigenen fahrenden Kraftfahrzeug messen und bei Gefahr einer Kollision ein Warnsignal abgeben. Diese Warnvorrichtungen sind nur beim fahrenden Fahrzeug aktiviert. Mit ihnen können Auffahrunfälle durch zu dichtes Auffahren oder Kollisionen bei Einparkvorgängen und Rangiervorgängen verhindert werden. Auch sind Vorrichtungen bekannt, die vor plötzlich in den Verkehrsraum eintretenden Objekten warnen, z.B. bei Wildwechseln. Es sei beispielhaft auf die Dokumente EP 1 962 255 A1, DE 10 2004 050 597 A1 und DE 103 45 680 A1 hingewiesen. Solche Warnvorrichtungen lösen das erfindungsgemäße Problem jedoch nicht, da sie bei stehenden Fahrzeugen keine Warnungen abgeben. Sie sind immer an den Betrieb des Fahrzeugs gebunden und können bei abgestellten Fahrzeugen mit ausgeschalteter Zündung nicht arbeiten.

Die erfindungsgemäße Warnvorrichtung ist den aus dem Stand der Technik bekannten Warnvorrichtungen daher überlegen und als Warnvorrichtung für die Warnung vor herannahenden Fahrzeugen auf Standstreifen und Seitenstreifen geeignet.

Der wenigstens eine Sensor der Warnvorrichtung kann ein Infrarotsensor, eine Kamera mit einem Bildverarbeitungssystem oder ein Radarsensor sein. Der Radarsensor hat dann einen Sender zum Aussenden von Radarsignalen und einen Empfänger zum Empfangen von an dem herannahenden Fahrzeug reflektierten Radarwellen.

Der Sender eines Radarsensors kann dazu geeignet und eingerichtet sein Radarwellen über mehrere verschiedene Winkelbereiche auszusenden, wobei die Winkelbereiche vorteilhaft symmetrisch zu einer Achse sind. Über die Wahl eines geeigneten Winkelbereichs kann eingestellt werden, in welchem Bereich die Warnvorrichtung herannahende Fahrzeuge erkennt. In der Praxis wird die Warnvorrichtung in Richtung des Standstreifens bzw. Seitenstreifens ausgerichtet. Um Fehlwarnungen zu vermeiden, muss dabei darauf geachtet werden, dass auf dem rechten Fahrstreifen fahrende Fahrzeuge von der Warnvorrichtung nicht erkannt werden. Es ist daher vorteilhaft, wenn die Winkelbereiche, die von dem Radarsensor, d.h. der Erfassungswinkel abgedeckt werden, eingestellt werden können. Ebenso ist es vorteilhaft, wenn die Reichweite des Senders veränderbar ist. Dazu wird in der Regel die Leistung des Senders verändert werden müssen.

Bei den Warnmitteln kann es sich um akustische und/oder optische Warnmittel handeln. Als akustische Warnmittel sind insbesondere Lautsprecher, Piezoschallgeber, Signalanlagen oder ähnliches geeignet. Als optische Warnmittel kommen Blinkleuchten, Rundumleuchten oder ähnliches infrage. Eine Blinkleuchte könnte beispielsweise in die Abstrahlungsrichtung des Senders, d.h. in Richtung des herannahenden Fahrzeugs ausgerichtet sein.

Eine erfindungsgemäße Warnvorrichtung kann so ausgestaltet sein, dass die Sensor- und Auswerteanordnung neben dem oder den Sensoren ein Auswertemittel umfasst. Bei dem Auswertemittel kann es sich insbesondere um einen Mikroprozessor handeln. Die Sensoren und das Auswertemittel sind vorteilhaft über eine Signalleitung miteinander verbunden. Die Signalleitung kann ein Bus insbesondere ein CAN-Bus sein. Über eine Signalleitung, insbesondere über einen CAN-Bus kann auch das Warnmittel mit dem Auswertemittel verbunden sein.

Die erfindungsgemäße Warnvorrichtung kann Teil eines Verkehrsobjektes sein. Die Warnvorrichtung kann insbesondere Teil einer Sondersignalanlage eines Fahrzeugs oder Teil des Fahrzeugs selbst sein. Die Warnvorrichtung, insbesondere die Sensoren der Warnvorrichtung sind dann so ausgerichtet, dass sie nur Fahrzeuge erfassen, die sich von hinten dem Fahrzeug nähern. Vorteilhaft ist die Sensor- und Auswerteanordnung geeignet und eingerichtet eine Verdeckung der Sensoren durch Personen oder andere Dinge, wie zum Beispiel einer Kofferraumhaube, zu erkennen. Sobald eine Verdeckung der Sensoren erkannt wurde, wird von der Sensor- und Auswerteanordnung kein Aktivierungssignal erzeugt.

Eine erfindungsgemäße Warnvorrichtung kann allerdings auch Teil einer Warnbake oder eines Warnschildes, z.B. eines Warndreiecks sein.

Anhand der beigefügten Zeichnungen wird die Erfindung nachfolgend näher erläutert. Dabei zeigt:
- Fig. 1: eine schematische Draufsicht einer Verkehrssituation, in welcher eine erfindungsgemäße Warnvorrichtung eingesetzt werden kann und
- Fig. 2: eine Sondersignalanlage mit erfindungsgemäßer Warnvorrichtung für ein Fahrzeug eines Pannenhilfsdienstes.

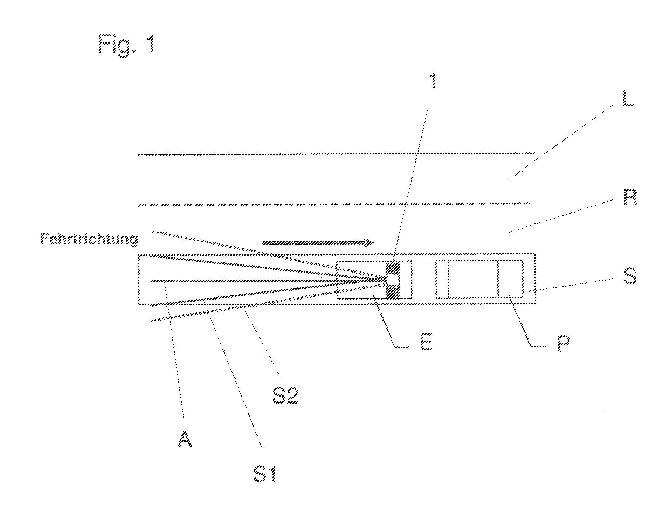

Die in Figur 1 dargestellte Verkehrssituation auf einem Autobahnabschnitt zeigt ein Pannenfahrzeug P welches auf einem Standstreifen S der Autobahn abgestellt ist. Neben dem Standstreifen S hatte die Autobahn einen rechten Fahrstreifen R und einen linken Fahrstreifen L. Die Fahrtrichtung der Autobahn ist durch den Pfeil auf dem rechten Fahrstreifen R angegeben.

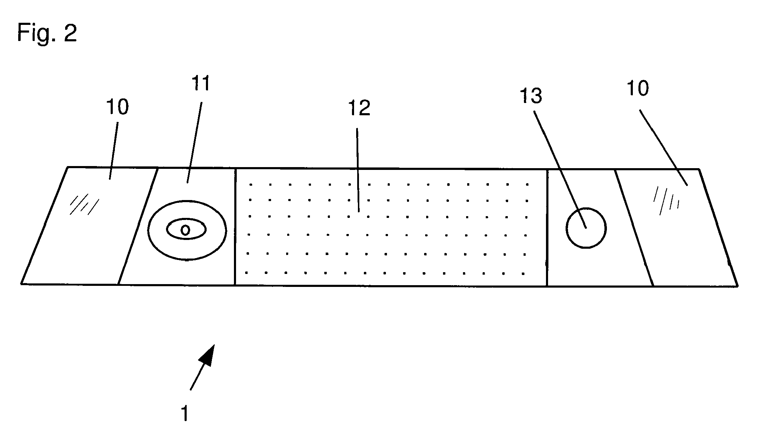

Hinter dem Pannenfahrzeug P ist ein Fahrzeug E eines Pannenhilfsdienstes abgestellt. Auf dem Dach des Fahrzeugs E des Pannenhilfsdienstes ist eine Sondersignalanlage 1 angebracht. Figur 2 zeigt eine Ansicht dieser Sondersignalanlage 1 von hinten.

Die Sondersignalanlage 1 hat zwei Blinkleuchten 10 die jeweils am linken Ende und am rechten Ende der Sondersignalanlage 1 vorgesehen sind. An die linke Blinkleuchte 10 schließt sich ein Lautsprecher 11 an. Bei dem Lautsprecher 11 handelt es sich um ein Warnmittel der erfindungsgemäßen Warnvorrichtung, die integraler Bestandteil der Sondersignalanlage 1 ist. Benachbart zu der rechten Blinkleuchte 10 ist ein Sensor 13 angebracht, der ebenfalls Teil der erfindungsgemäßen Warnvorrichtung ist. Zwischen dem Lautsprecher 11 und dem Sensor 13 ist eine elektronische Anzeige 12 angebracht. Ein Auswertemittel der erfindungsgemäßen Warnvorrichtung ist Teil der Sondersignalanlage 1 allerdings in der Figur 2 nicht dargestellt.

Der Sensor 13 hat verschiedene Erfassungsbereiche. In der Figur 1 sind beispielhaft die Grenzen von zwei verschiedenen Erfassungsbereichen dargestellt und jeweils mit S 1 bzw. S 2 bezeichnet. Die Grenzen der beiden Erfassungsbereiche sind symmetrisch zu einer Achse A. Um zu verhindern, dass Fahrzeuge erfasst werden, die auf dem rechten Fahrstreifen der Autobahn unterwegs sind, kann der Erfassungsbereich verändert werden. Im dargestellten Beispiel werden nur Fahrzeuge erfasst, die sich aus dem Standstreifen von hinten dem Fahrzeug E nähern. Dazu wurde die Sensor- und Auswerteanordnung der erfindungsgemäßen Warnvorrichtung so eingestellt, dass nur Fahrzeuge im Erfassungsbereich mit den Grenzen S 1 erfasst werden. Sobald ein Fahrzeug in dem gewählten Erfassungsbereich erkannt wird, dass eine Geschwindigkeit und einer Entfernung hat, die voraussichtlich zu einer Kollision mit dem Fahrzeug E führen könnten, aktiviert die Sensor- und Auswerteanordnung die Blinkleuchten 10 und den Lautsprecher 11 zum Abgeben von optischen bzw. akustischen Warnsignalen.

### Bezugszeichenliste

- L: linker Fahrstreifen
- R: rechter Fahrstreifen
- S: Standstreifen
- E: Fahrzeug eines Pannenhilfsdienstes
- P: Pannenfahrzeug

- 1: Sondersignalanlage
- 10: Blinkleuchte
- 11: Lautsprecher
- 12: elektronische Anzeigetafel
- 13: Sensor
- A: Symmetrieachse
- S1: Grenze eines ersten Erfassungsbereichs
- S2: Grenze eines zweiten Erfassungsbereichs

## Patentansprüche

1. Warnvorrichtung (1) für Verkehrsobjekte (E), zum Beispiel Fahrzeuge, Sondersignalanlagen an Fahrzeugen, transportable Warnbaken oder Warnschilder, zum Einsatz am ruhenden Verkehrsobjekt mit folgenden Merkmalen:
- die Warnvorrichtung (1) weist eine Sensor- und Auswerteanordnung und wenigstens ein Warnmittel (10, 11) auf,
- die Sensor- und Auswerteanordnung weist wenigstens einen Sensor (13) zum Erfassen der Entfernung und der Geschwindigkeit eines sich dem Verkehrsobjekt nähernden Fahrzeugs auf,
- die Sensor- und Auswerteanordnung ist zum Auswerten der Entfernung und Geschwindigkeit und Erzeugen eines Aktivierungssignals geeignet und eingerichtet, das erzeugt wird, wenn bei weiterer Annäherung des Fahrzeugs ein Auffahren des Fahrzeugs auf das Verkehrsobjekt (E) droht, und das an einem Ausgang des Auswertemittels abgreifbar ist,
- das wenigstens eine Warnmittel (10, 11) ist mit dem Ausgang der Sensor- und Auswerteanordnung verbunden und zum Erzeugen von wenigstes einem Warnsignal geeignet und eingerichtet, wenn am Ausgang ein Aktivierungssignal anliegt.

2. Warnvorrichtung (1) nach Anspruch 1, **dadurch gekennzeichnet, dass** der wenigstens eine Sensor ein Infrarotsensor oder eine Kamera mit einem Bildverarbeitungssystem ist.

3. Warnvorrichtung (1) nach Anspruch 1, **dadurch gekennzeichnet, dass** der wenigstens eine Sensor (13) einen Radarsensor mit einem Sender und einem Empfänger hat.

4. Warnvorrichtung (1) nach Anspruch 2, **dadurch gekennzeichnet, dass** der Sensor (13) geeignet und eingerichtet ist Radarwellen über mehrere zum Beispiel 16 verschiedene Winkelbereiche auszusenden, wobei die Winkelbereiche symmetrisch zu einer Achse sind.

5. Warnvorrichtung (1) nach Anspruch 4, **dadurch gekennzeichnet, dass** eine Reichweite des Senders und / oder, dass der Erfassungsbereich, insbesondere der Erfassungswinkel des wenigstens einen Sensors veränderbar ist.

6. Warnvorrichtung (1) nach einem der Ansprüche 1 bis 5, **dadurch gekennzeichnet, dass** die Warnmittel akustische und/oder optische Warnmittel umfassen.

7. Warnvorrichtung nach Anspruch 9, **dadurch gekennzeichnet, dass** die Blinkleuchte in die Abstrahlrichtung des Senders ausgerichtet ist.

8. Warnvorrichtung (1) nach einem der Ansprüche 1 bis 10, **dadurch gekennzeichnet, dass** die Sensor- und Auswerteanordnung neben dem oder den Sensoren ein Auswertemittel umfasst, die über eine Signalleitung oder einen Bus, zum Beispiel einen CAN-Bus miteinander verbunden sind.

9. Warnvorrichtung nach einem der Ansprüche 1 bis 8, **dadurch gekennzeichnet, dass** die Warnvorrichtung (1) so ausgerichtet ist, dass sie nur Fahrzeuge (E) erfasst, die sich dem Fahrzeug von hinten nähern.

10. Warnvorrichtung (1) nach einem der Ansprüche 1 bis 9, **dadurch gekennzeichnet, dass** das Sensor- und Auswertemittel bei Verdeckung des oder der Sensoren geeignet und eingerichtet ist kein Aktivierungssignal zu erzeugen.

11. Warnvorrichtung (1) nach einem der Ansprüche 1 bis 10, **dadurch gekennzeichnet, dass** die Warnvorrichtung Teil einer Warnbake oder Teil eines Warnschildes oder Teil des Verkehrsobjektes oder Teil einer Sondersignalanlage eines Fahrzeugs (E) oder Teil eines Fahrzeugs ist.
